Europäisches Patentamt

(19) European Patent Office

Office européen des brevets

(11) Numéro de publication: **0 032 645**
**B1**

(12) **FASCICULE DE BREVET EUROPEEN**

(45) Date de publication du fascicule du brevet: **27.04.83**

(51) Int. Cl.³: **F 16 H 7/08, F 16 H 7/12**

(21) Numéro de dépôt: **80401843.0**

(22) Date de dépôt: **22.12.80**

(54) **Tendeur universel pour chaîne ou courroie de transmission.**

(30) Priorité: **18.01.80 FR 8001042**

(43) Date de publication de la demande:
**29.07.81 Bulletin 81/30**

(45) Mention de la délivrance du brevet:
**27.04.83 Bulletin 83/17**

(84) Etats contractants désignés:
**DE GB IT**

(56) Documents cités:
**FR - A - 1 523 640**
**FR - A - 2 167 818**
**GB - A - 1 089 725**
**US - A - 2 513 436**

(73) Titulaire: **COMPAGNIE DES TRANSMISSIONS
MECANIQUES SEDIS Société dite:
102 Rue Danton
F-92306 Levallois Perret (FR)**

(72) Inventeur: **Kohler Bernard
45 Allée de la Forêt
78170 La Celle St-Cloud (FR)**

(74) Mandataire: **Bressand, Georges et al,
c/o CABINET LAVOIX 2 Place d'Estienne d'Orves
F-75441 Paris Cedex 09 (FR)**

Courier Press, Leamington Spa, England.

## Tendeur universel pour chaîne ou courroie de transmission

La présente invention se rapporte aux tendeurs mécaniques universels pour chaînes ou courroies utilisées, notamment, dans les commandes de distribution des moteurs à combustion interne, et plus particulièrement à des tendeurs mécaniques capables d'assurer un fonctionnement irréversible lors des inversions de couple.

Le FR—A—1 523 640 décrit un tel tendeur méchanique à fonctionnement irréversible qui comprend une rampe courbe adaptée pour prendre appui sur la chaîne ou courroie et portée par un premier bras articulé sur un second bras destiné à être monté sur une partie fixe du moteur. Un coin coulissant monté entre les deux bras est sollicité par un ressort dans le sens qui tend à écarter les deux bras, de sorte que, le second bras étant fixe, le coin a pour effet de repousser la rampe coulissante contre la chaîne ou courroie et de tendre celle-ci. Le ressort est monté sur une tige articulée autour de l'axe d'articulation commun aux deux bras et s'étendant à travers un alésage du coin. Pour assurer l'irréversibilité du mécanisme, le coin coulissant et le premier bras portent des dentures complémentaires inclinées qui, en fonctionnement, sont en prise de manière à autoriser l'avance du coin dans le sens qui tend à écarter les deux bras et à interdire son déplacement dans l'autre sens. Toutefois, ce tendeur présente l'inconvénient que le réglage de la tension de la chaîne ou courroie s'effectue par quantités discrètes correspondant au pas des dentures complémentaires du coin coulissant et du bras. En outre, ces dentures compliquent la réalisation de ce tendeur et grèvent son coût de fabrication.

On connaît également le US—A—2 513 436 qui décrit un tendeur de courroie dont les moyens antiretour sont constitués par une barre articulée pourvue d'un trou qui traverse une tige articulée sur un levier portant à l'une de ses extrémités une poulise folle assurant la tension de la courroie. Cependant, ce tendeur ne décrit pas les caractéristiques originales de la présente invention suivant lesquelles la force assurant la tension de la chaîne ou courroie est assurée par une poussée résultant du déplacement d'un coin entre une surface fixe et une surface mobile, tandis que le fonctionnement anti-retour résulte de l'arc-boutement d'une plaquette montée librement sur une tige entre le coin et un ressort.

On connaît par ailleurs par le GB—A—1 089 725 un tendeur mécanique à action irréversible dans lequel le réglage de la tension de la chaîne ou courroie s'effectue de façon continue. Ce tendeur comprend un galet qui est monté fou à l'extrémité d'un levier articulé et qui prend appui contre la chaîne ou courroie. La tension de la chaîne ou courroie est assurée par un premier ressort qui exerce un effort de traction entre le levier et un point fixe. Le levier porte un bras transversal qui s'étend à travers un orifice d'un organe ayant un point d'appui fixe. Cet organe est sollicité par un second ressort pour assurer, par réaction sur le point d'appui, le coincement du bras dans un sens, c'est-à-dire celui de retour en arrière, tout en autorisant le coulissement du bras à travers cet organe dans le sens correspondant à l'accroissement de la tension de la chaîne ou courroie. Bien qu'assurant un réglage continu de la chaîn ou courroie, ce tendeur a néanmoins pour inconvénient de comporter un grand nombre de pièces nuisible à sa production en grande série et d'être d'un encombrement important.

La présente invention vise à réaliser un tendeur mécanique universel à action irréversible qui combine les avantages des deux tendeurs de la technique antérieure décrits ci-dessus sans en cumuler les inconvénients, c'est-à-dire qui assure un réglage continu de la tension tout en étant compact et en ne nécessitant qu'un minimum de pièces pour sa construction.

A cet effet, la présente invention a pour objet un tendeur mécanique universel pour chaîne ou courroie de transmission destinée, en particulier, à la commande de distribution de moteurs à combustion interne, comportant une rampe courbe adaptée pour prendre appui sur la chaîne ou la courroie et articulée sur une pièce de support fixe, un coin monté coulissant sur la pièce support et sollicité élastiquement par un ressort pour appliquer la rampe courbe contre la chaîne ou la courroie, une tige de guidage s'étendant à travers un alésage du coin coulissant et sur laquelle est monté le ressort, et des moyens antiretour pour emprêcher tout déplacement du coin coulissant à l'encontre du ressort, caractérisé en ce que lesdits moyens sont constitués par une plaquette montée coulissante sur la tige de guidage entre le ressort et le coin coulissant et adaptée pour prendre appui le long d'un de ses bords contre ledit coin, créant ainsi un effort excentré qui arc-boute la plaquette sur la tige de guidage.

D'autres caractéristiques et avantages de l'invention ressortiront de la description qui va suivre, faite en se référant aux dessins annexés donnés uniquement à titre d'exemples et sur lesquels:

la Fig. 1 est une vue en coupe longitudinale d'un mode de réalisation du tendeur suivant l'invention; et

la Fig. 2 est une vue en plan, avec arrachements partiels, d'un autre mode de réalisation du tendeur suivant l'invention.

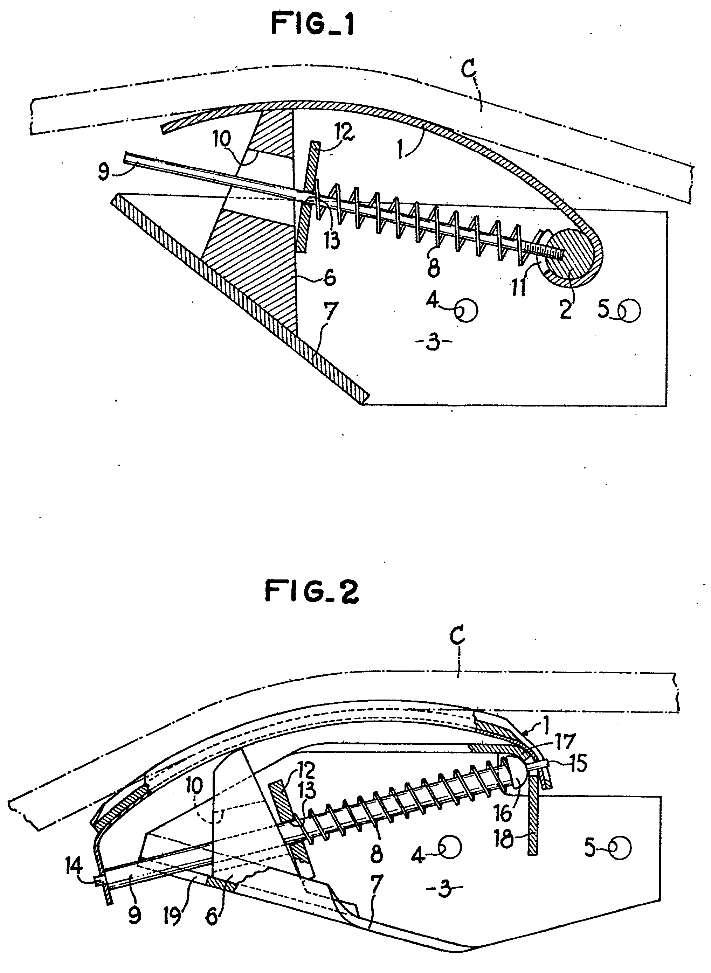

En se reportant à la Fig. 1, le tendeur comprend une lame courbe 1 mobile autour d'un axe 2 solidaire d'une pièce de support 3. Cette pièce de support est fixée sur une face d'un moteur (non représenté) à l'aide de deux boulons passant à travers des trous 4 et 5 pratiqués dans la pièce de support. La chaîne ou la courroie C du moteur prend appui sur la face externe de la lame 1. La lame 1 est sollicitée contre la chaîne ou courroie C par une pièce mobile 6 en forme de coin qui prend appui, d'une part, sur la face interne de la lame 1 et, d'autre part, sur une rampe inclinée 7 formée par une patte relevée de la pièce de support 3. Par ailleurs, ce coin 6 est sollicité par un ressort 8 guidé sur une tige 9, solidaire de l'axe 2 et traversant le coin 6 par un alésage 10, et l'extrémité de la lame 1 enroulée autour de l'axe 2 présente une lumière 11 pour permettre le débattement de la lame 1 autour de son axe. L'action du ressort 8 sur le coin 6 s'exerce par l'intermédiaire d'une plaquette 12 présentant un alésage 13 traversé par la tige 9 et très légèrement supérieur au diamètre de la tige. Cette plaquette 12 appuie sur une face latérale inclinée du coin 6 par une de ses arêtes, ce qui a pour effet de créer un couple qui tend à faire basculer la plaquette et à l'arc-bouter sur la tige 9. Cet arc-boutement est positif et assure un effet anti-retour irréversible si le jeu entre la tige 9 et l'alésage 13 de la plaquette 12 est tel que l'angle de pivotement possible de la plaquette en fonction de son épaisseur est inférieur à l'angle de coincement, soit environ 6°. On voit que le coin 6 est toujours sollicité d'avancer vers la gauche, en regardant la Fig. 1, grâce à l'action du ressort 8, tandis que son retour vers la droite sous l'action d'efforts de compression exercés sur la lame 1 par la courroie ou chaîne C est empêché grâce à l'arc-boutement de la plaquette 12 sur la tige 9.

Au montage, on neutralise le dispositif anti-retour en glissant une fourchette à cheval sur la tige 9 entre le coin 6 et la plaquette 12 et en comprimant le ressort 8, ce qui permet d'armer le dispositif tendeur pour sa mise en place aisée sur le moteur. Ensuite, pendant le fonctionnement, la tension de la chaîne ou courroie C est maintenue par le coin 6 qui, sous l'effet du ressort 8, tend à écarter la rampe mobile 1 de la rampe fixe 7 en se déplaçant vers la gauche, jusqu'à ce qu'il atteigne la position de fin de course dans laquelle il se trouve au maximum vers la gauche en regardant la Fig. 1.

On se reportera maintenant au mode préféré de réalisation de la Fig. 2 sur laquelle les mêmes numéros de référence que sur la Fig. 1. ont été conservés pour les parties semblables. Dans cette variante, au lieu d'être fixée à l'axe 2, la tige 9 est encastrée à ses deux extrémités dans la lame 1, par exemple à l'aide de deux tétons 14 et 15 venus de décolletage. D'autre part, l'articulation de la lame 1 sur la pièce de support 3 se fait par une rotule demi-cylindrique 16 montée libre sur la tige 9, qui prend appui sur une partie arrondie 17 réalisée par pliage d'une patte 18 découpée dans la pièce de support 3, et contre laquelle elle est pressée par le ressort 8. Einfin, la rampe inclinée 7 comporte à son extrémité arrière une échancrure 19 pour permettre le passage de la tige 9 lorsque le dispositif est amené en position armée.

Ce mode de réalisation, dont le fonctionnement est identique à celui de la Fig. 1, permet d'obtenir une articulation pratiquement sans jeu avec une rotation sous pression constante réglable par la force du ressort. Le guidage du coin 6 sur la pièce de support peut se faire, comme dans le mode de réalisation précédent, au moyen d'une partie de la pièce de support 3 repliée en forme de U, ou au moyen d'une fente pratiquée dans la rampe inclinée et recevant un téton (non représenté) solidaire du coin 6. Dans ce mode de réalisation, la pièce de support peut être réalisée complètement en tôle pliée, donc relativement bon marché.

Avec le tendeur suivant l'invention, ce n'est pas le coin 6 qui forme lui-même anti-retour: son angle peut donc être grand, ce qui permet une grande course de la lame 1 avec un effort relativement faible sur l'organe de transmission, chaîne ou courroie. D'autre part, l'arc-boutement de la plaquette 12 sur la tige 9 permet une irréversibilité de mouvement dont la résolution est infinie, contrairement aux dispositifs à dentures ou crémaillère, tel que celui décrit dans le FR—A—1 523 640, qui procèdent par sautes successives. L'absence de dentures permit d'utiliser des pièces de forme beaucoup plus simple, puisqu'il suffit que le bord supérieur de coin 1 soit simplement en appui contre la face intérieure de la rampe 1. On constate également que le tendeur suivant l'invention est beaucoup plus simple que celui du GB—A—1 089 725 puisqu'il ne nécessite qu'un seul ressort servant à la fois à assurer la tension de la chaîne our courroie et à armer le dispositif anti-retour, et qu'en outre il ne requiert pas de point d'appui fixe pour l'arc-boutement de la plaquette.

Enfin, on notera qu'il peut exister un certain jeu entre l'alésage 13 de la plaquette 12 et la tige de guidage 9 de manière à retarder l'action d'arc-boutement, conférant ainsi au dispositif anti-retour une certaine élasticité.

**Revendications**

1. Tendeur mécanique universal pour chaîne ou courroie de transmission (C) destinée, en particulier, à la commande de distribution de moteurs à combustion interne, comportant une rampe courbe (1) adaptée pour prendre appui sur la chaîne ou la courroie (C) et articulée sur une pièce de support fixe (3), un coin (6) monté coulissant sur la pièce support (3) et sollicité élastiquement par un ressort (8) pour appliquer la rampe courbe (1) contre la chaîne ou la courroie (C), une tige de guidage (9) s'étendant à travers un alésage (10) du coin coulissant (6) et sur laquelle est monté le ressort (8), et des moyens anti-retour (12) pour empêcher tout déplacement du coin coulissant (6) à l'encontre du ressort (8), caractérisé en ce que lesdits moyens sont constitués par une plaquette (12) montée coulissante sur la tige de guidage (9) entre le ressort (8) et le coin coulissant (6) et adaptée pour prendre appui le long d'un de ses bords contre ledit coin (6) créant ainsi un effort excentré qui arc-boute la plaquette sur la tige de guidage (9).

2. Tendeur suivant la revendication 1, caractérisé en ce que la tibe de guidage (9) est solidaire d'un axe (2) fixé à la pièce de support (3) et autour duquel est articulée ladite rampe courbe (1).

3. Tendeur suivant la revendication 1, caractérisé en ce que la tige de guidage (9) est fixée à ses deux extrémités à la rampe mobile (1) et porte une rotule (16) par laquelle elle est articulée sur la pièce support (3).

4. Tendeur suivant l'une quelconque des revendications 1 à 3, caractérisé en ce que la plaquette (12) présente un alésage (13) traversé par la tige de guidage (9) avec un certain jeu de manière à retarder l'action d'arc-boutement.

## Patentansprüche

1. Mechanische Universal-Spannvorrichtung für eine Transmissionskette oder einen Transmissionsriemen (C), die bzw. der insbesondere als Steuertrieb für eine Brennkraftmaschine bestimmt ist, mit einer gekrümmten Rampe (1), die so beschaffen ist, daß sie zur Anlage auf der Kette oder den Riemen (C) kommt, und die gelenkig mit einem festen Stützteil (3) verbunden ist, einem Gleitkeil (6), der gleitbeweglich auf dem Stützteil (3) angebracht ist und elastisch durch eine Feder (8) beaufschlagt ist, um die gekrümmte Rampe (1) gegen die Kette oder den Riemen (C) zu legen, einem Führungsstab (9), der sich durch eine Eohrung (10) des Gleitkeils (6) erstreckt und auf dem die Feder (8) angebracht ist und mit einer eine Rückführrung verhindernden Einrichtung (12) zum Verhindern einer Verschiebung des Gleitkeils (6) gegen die Feder (8), dadurch gekennzeichnet, daß die eine Rückführung verhindernde Einrichtung von einer kleinen Platte (12) gebildet wird, die gleitbeweglich auf dem Führungsstab (9) zwischen der Feder (8) un dem Gleitkeil (6) angebracht ist und die so beschaffen ist, daß sie längs einer ihrer Ränder zur Anlage gegen den Keil (6) kommt und so eine exzentrische Kfrat erzeugt, die die kleine Platte auf dem Führungsstab (9) stützt.

2. Spannvorrichtung nach Anspruch 1, dadurch gekennzeichnet, daß der Führungsstab (9) fest mit einer Achse (2) verbunden ist, die am Stützteil (3) festliegt und um die die gekrümmte Rampe (1) gelenkig gelagert ist.

3. Spannvorrichtung nach Anspruch 1, dadurch gekennzeichnet, daß der Führungsstab (9) an seinen beiden Enden fest mit der beweglichen Rampe (1) verbunden ist und einen Kugelkopf (16) trägt, mittels dem er gelenkig auf dem Stützteil (3) gelagert ist.

4. Spannvorrichtung nach einem der Ansprüche 1 bis 3, dadurch gekennzeichnet, daß die kleine Platte (12) eine Bohrung (13) aufweist, die von dem Führungsstab (9) unter Einhaltung eines solchen Spiels durchsetzt ist, daß die Abstützwirkung vorzögert wird.

## Claims

1. A universal mechanical tightener for a transmission chain or belt (c) for in particular the timing-gear of internal combustion engines, said tightener comprising a curved strip (1) adapted to bear against the chain or the belt (c) and pivotally mounted on a fixed support member (3), a wedge member (6) slidably mounted on the support member (3) and elastically biased by a spring (8) for applying the curved strip against the chain or belt (c), a guide rod (9) extending through a bore (10) in the slidable wedge member (6), on which rod there is mounted a spring (8), and anti-return means (12) for preventing any displacement of the slidable wedge member (6) in opposition to the action of the spring (8), wherein said anti-return means comprise a plate (12) which is slidably mounted on the guide rod (9) between the spring (8) and the slidable wedge member (6) and adapted to bear along one of the edges thereof against said wedge member (6) and thereby exert an eccentric force which jams the plate on the guide rod (9).

2. A tightener according to claim 1, wherein the guide rod (9) is rigid with a pin (2) fixed to the support member (3), said curved strip (1) being pivotally mounted on the pin.

3. A tightener according to claim 1, wherein the guide rod (9) is fixed at both ends to the movable strip (1) and carries a knee joint (16) whereby it is pivotally mounted on the support member (3).

4. A tightener according to any one of the claims 1 to 3, wherein the plate (12) has an aperture (13) through which the guide rod (9) extends with clearance so as to delay the jamming action.

FIG_1

FIG_2